# EUROPÄISCHE PATENTSCHRIFT

(11) **EP 3 238 904 B1**
(45) Veröffentlichungstag und Bekanntmachung des Hinweises auf die Patenterteilung: **20.02.2019**
(21) Anmeldenummer: 17165691.1
(22) Anmeldetag: 10.04.2017
(51) Int. Cl.: B29C 44/42, C08L 83/04, C08J 9/12

(54) **VERFAHREN ZUM PHYSIKALISCHEN SCHÄUMEN VON SILIKONKAUTSCHUKKÖRPERN**
METHOD FOR THE PHYSICAL FOAMING OF SILICONE RUBBER MEMBERS
PROCÉDÉ DE MOUSSAGE PHYSIQUE DE CORPS EN CAOUTCHOUC DE SILICONE

(30) Priorität: 28.04.2016 DE 102016005111
(43) Veröffentlichungstag der Anmeldung: 01.11.2017
(73) Patentinhaber: Universität Kassel, 34125 Kassel (DE)
(72) Erfinder: Hartung, Michael, 34593 Knüllwald (DE); Bogedale, Lucas, 34131 Kassel (DE); Giesen, Ralf-Urs, 34323 Malsfeld (DE); Heim, Hans-Peter, 33332 Gütersloh (DE)
(74) Vertreter: Patentanwälte Walther Hinz Bayer PartGmbB

(56) Entgegenhaltungen:
- DE-A1-102006 030 403
- DATABASE WPI Week 200423 Thomson Scientific, London, GB; AN 2004-241886 XP002773806, -& JP 2003 226774 A (TOSHIBA SILICONE KK) 12. August 2003 (2003-08-12)

## Beschreibung

Die Erfindung betrifft ein Verfahren zum physikalischen Schäumen von Silikonkautschukkörpern mittels Flüssigsilikonkautschuk.

### STAND DER TECHNIK

Für das physikalische Schäumen von Silikonkautschukkörpern existieren Treibmittel wie zum Beispiel Stickstoffe oder Kohlendioxide. Dabei wird der Polymermasse während einer Dosierung ein unter hohem Druck stehendes Treibfluid über eine spezielle Anlage zugeführt. Beim Einspritzen der Polymermasse in die Kavität eines Spritzgusswerkzeugs findet ein Druckabfall des unter Druck stehenden Treibmittels statt, sodass dieses expandiert. Dadurch kann das Treibmittel einen gasförmigen Aggregatzustand erlangen und dieses bildet eine poröse Struktur der Polymermasse innerhalb der Kavität aus, sodass ein im Wesentlichen formstabiler Silikonkautschukkörper gebildet wird.

In diesem Zusammenhang ist aus der DE 10 2006 030 403 A1 bekannt, einer Formmasse mit Flüssigsilikon in einem Mischer ein Treibfluid unter hohem Druck zuzuführen. In der Werkzeugform kann die Formmasse aufgrund des hohen Drucks dann durch Aufschäumen expandieren.

Beim chemischen Schäumen hingegen werden der Polymermasse Stoffe zugemischt, die im Verarbeitungsprozess durch eine chemische Reaktion Gase freisetzen. Diese führen dann zu einer Expansion, wobei das chemische Schäumen häufig mit einer erhöhten Umweltbelastung und mit der Beimengung des Treibmittels zum Silikonkautschukkörper einhergeht. Hingegen ist auch beim physikalischen Schäumen nicht jedes Treibmittel frei von negativen Nebeneffekten auf den Silikonkautschukkörper.

Allgemein dient das Aufschäumen zur Dichtereduzierung von Silikonkautschukkörpern durch das Einbringen von Gasbläschen, welche beispielsweise von einem Flüssigsilikonkautschuk umschlossen werden. Die Dichtereduzierung führt zum einen zu einer Materialersparnis, welche im Hinblick auf die vergleichsweise hohen Materialkosten von einer Flüssigsilikonkautschukmasse wirtschaftlich bedeutend ist. Zum anderen verändert das Aufschäumen die Materialeigenschaften wie beispielsweise das Gewicht, mechanische Kennwerte und dergleichen, sodass ein formstabiler Silikonkautschukkörper geschaffen werden kann, der eine geringe Dichte und beispielsweise gummielastische Eigenschaften aufweist.

Die DE 42 35 309 A1 offenbart eine Treibmittelzusammensetzung auf Grundlage von wässrigen Emulsionen umfassend Organopolysiloxane, Emulgatoren, Wasser und Verdickungsmittel zur Herstellung von elastomeren Silikonschaumstoffen. Weiterhin offenbart ist ein Verfahren zur Herstellung von Treibmittelzusammensetzungen und es sind zur Bildung von elastomeren Silikonschaumstoffen härtbare Massen offenbart, die mit entsprechenden Treibmittelzusammensetzungen aufschäumbar sind. Damit ist die Verwendung von Wasser zur Bildung eines Treibmittels in Verbindung mit einer Reihe von weiteren Bestandteilen der Treibmittelzusammensetzung bekannt.

Für ein vorteilhaftes physikalisches Schäumen von Silikonkautschukkörpern bietet sich dabei ein Spritzgussverfahren an, wobei die Prozessführung zur Herstellung eines spritzgegossenen Silikonkautschukkörpers häufig mit sehr vielen Variablen ausgeführt werden muss und damit eine wirtschaftliche Umsetzung häufig erschwert.

### OFFENBARUNG DER ERFINDUNG

Es ist die Aufgabe der Erfindung, ein Verfahren zum physikalischen Schäumen von Silikonkautschukkörpern mittels Flüssigsilikonkautschuk so weiterzubilden, dass bei einer einfachen Bereitstellung eines Treibmittels auf wirtschaftlich vorteilhafte Weise ein Silikonkautschukkörper erzeugt werden kann.

Diese Aufgabe wird ausgehend von einem Verfahren gemäß Anspruch 1 mit den kennzeichnenden Merkmalen gelöst. Vorteilhafte Weiterbildungen der Erfindung sind in den abhängigen Ansprüchen angegeben.

Das Verfahren schließt erfindungsgemäß wenigstens die folgenden Schritte ein: Zugabe von Wasser in den Flüssigsilikonkautschuk unter Bildung einer Emulsion, Zuführen der Emulsion an eine Extrudereinheit, Erwärmen der Emulsion vor oder in der Extrudereinheit bis unter eine Verdampfungstemperatur des Wassers und Einspritzen der Emulsion in ein Werkzeug unter a) Vulkanisation des Flüssigsilikonkautschuks, unter b) Erhitzung des Wassers bis über eine Verdampfungstemperatur des Wassers und unter c) Aufschäumen eines formstabilen Silikonkautschukkörpers, wobei das Werkzeug eine beheizte Kavität aufweist, wobei die wenigstens überwiegende Vulkanisation des Flüssigsilikonkautschuks und die Erhitzung des Wassers bis über eine Verdampfungstemperatur des Wassers mittels eines Wärmeeintrags in die Emulsion durch das Werkzeug erfolgt, wobei die Emulsion in der Kavität des Werkzeugs auf 100°C bis 250°C erhitzt wird.

Das erfindungsgemäße Verfahren geht zunächst aus von einer Bereitstellung eines Flüssigsilikonkautschuks (LSR), worunter vorliegend alle fließfähigen Silikonkautschukmassen verstanden werden, insbesondere alle Arten von 2K- Silikonkautschukmassen.

Unter Zugabe von einfachem Wasser in den Flüssigsilikonkautschuk wird eine Emulsion gebildet, sodass mit der Emulsion der Flüssigsilikonkautschuk zur Weiterverarbeitung das Treibmittel bereits umfasst. Die Emulsion wird an eine Extrudereinheit überführt, vor oder in der die Emulsion bis unter eine Verdampfungstemperatur des Wassers erhitzt wird. Gewöhnlich kann die Emulsion in der Extrudereinheit selbst erhitzt werden, wobei es auch vorteilhaft sein kann, in einer zwischengeschalteten Erwärmungsstation die Emulsion auf eine Temperatur zu erwärmen, die unterhalb der Verdampfungstemperatur des Wassers in der Emulsion liegt.

Die Erhitzung erfolgt dabei insbesondere drucklos, sodass erst ein Druck in der Emulsion aufgebaut wird, wenn diese in die Extrudereinheit überführt wurde. Schließlich kann mit der Extrudereinheit ein Einspritzen der Emulsion in das Werkzeug erfolgen, wobei wenigstens überwiegend die Vulkanisation des Flüssigsilikonkautschuks innerhalb der Kavität des Werkzeuges erfolgt. Dabei kann eine Vorvulkanisation des Flüssigsilikonkautschuks zumindest teilweise auch bereits vor dem Extruder stattfinden, wobei die Extrudierbarkeit der Emulsion erhalten bleiben muss. Prozessrelevant ist dabei der Erhalt der Emulsion in einem unvernetzten Zustand mit einem Wasseranteil, welches Wasser in diesem Stadium noch in flüssiger Form vorliegen soll. Erst nach Einspritzen der Emulsion in das Werkzeug soll das Wasser verdampfen, indem innerhalb des Werkzeuges, also in der Kavität des Werkzeuges, die Erhitzung des Wassers bis über eine Verdampfungstemperatur des Wassers erfolgt, und durch die Verdampfung des Wassers und mit der damit einhergehenden Volumenzunahme erfolgt das Aufschäumen des Flüssigsilikonkautschuks zu einem formstabilen Silikonkautschukkörper.

Mit Bezug auf die Temperatur ist der erfindungsgemäße Herstellungsprozess dreistufig. Die Bereitstellung des Flüssigsilikonkautschuks, die Zugabe von Wasser und die Erzeugung der Emulsion erfolgen insbesondere bei Raumtemperatur, womit der erste Schritt erfüllt ist. Der zweite Schritt bezieht sich auf eine Erwärmung der Emulsion in der Extrudereinheit oder vor der Extrudereinheit bis unter eine Verdampfungstemperatur des Wassers, und der dritte Schritt umfasst das Erhitzen des Wassers in der Emulsion bis auf eine Temperatur, die über der Verdampfungstemperatur des Wassers liegt. Diese Erhitzung des Wassers gemäß dem dritten Schritt erfolgt dabei innerhalb der Kavität des Werkzeuges.

Ein wesentliches Merkmal, mit dem das Verfahren zum physikalischen Schäumen von Silikonkautschukkörpern erfindungsgemäß ausgeführt werden kann, besteht darin, dass das Werkzeug eine beheizte Kavität aufweist, wobei die wenigstens überwiegende Vulkanisation des Flüssigsilikonkautschuks und die Erhitzung des Wassers bis über eine Verdampfungstemperatur des Wassers mittels eines Wärmeeintrags in die Emulsion durch das Werkzeug erfolgt. Das Verfahren soll dabei nicht darauf beschränkt sein, dass der Flüssigsilikonkautschuk ausschließlich in der Kavität des Werkzeuges vulkanisiert, da auch im Extruder bereits eine Vorvulkanisation stattfinden kann, die Vorvulkanisation jedoch nicht erfolgen muss.

Beispielsweise wird die Emulsion in der Extrudereinheit auf 30 °C bis 80 °C erhitzt. Das Erhitzen der Emulsion kann auch auf eine Temperatur über 80 °C erfolgen, wobei die Emulsion jedoch nicht auf eine Temperatur erhitzt wird, die ein Erreichen eines Siedepunktes des Wassers in der Emulsion ermöglicht. Beispielsweise wird die Emulsion von einer Raumtemperatur beginnend aufgeheizt, wobei das Aufheizen in der Extrudereinheit erfolgt und wobei das Aufheizen beispielsweise zunächst bis unter 100 °C erfolgen kann, sodass das Wasser in der Emulsion nicht den Siedepunkt erreicht, sofern die Emulsion in der Extrudereinheit wenigstens anfänglich bei Normaldruck vorliegt. Die Emulsion wird in der Kavität des Werkzeuges auf eine Temperatur von mindestens 100 °C erhitzt, nämlich von 100 °C bis 250 °C. Die Erhitzung der Emulsion erfolgt so schnell, dass die Durchmischung des Wassers mit dem Flüssigsilikonkautschuk erhalten bleibt, und sodass bei einer Gasblasenbildung durch das verdampfende Wasser die Gasblasen von der Silikonkautschukmasse umschlossen bleiben.

Ein weiterer Vorteil wird erreicht, wenn die Beheizung der Kavität des Werkzeuges nach einem Vulkanisieren des Flüssigsilikonkautschuks und nach einer Verdampfung des Wassers innerhalb der Kavität beendet wird. Nach Erkalten des gebildeten formstabilen Silikonkautschukkörpers kann das Werkzeug geöffnet werden und der formstabile Silikonkautschukkörper kann aus der Kavität entnommen werden. Die Formstabilität des Silikonkautschukkörpers umfasst dabei in vorliegendem Sinne auch weiche, gummielastische Silikonkautschukkörper, sofern der Silikonkautschukkörper beispielsweise nach einer Kraftbeaufschlagung in seine ursprüngliche Form zurückfindet. Die Zumischung des Wassers in den Flüssigsilikonkautschuk kann gemäß einer möglichen Variante des erfindungsgemäßen Verfahrens in einer Wassermischeinrichtung ausgeführt werden, wobei die Wassermischeinrichtung der Mischeinrichtung zur Mischung der ersten Komponente und der zweiten Komponente nachgelagert ist.

Gemäß einer weiteren Variante zur Ausführung des erfindungsgemäßen Verfahrens wird dem Flüssigsilikonkautschuk wenigstens ein Additiv über eine Additivzumischeinrichtung zugemischt, wobei das Wasser mit dem Additiv ebenfalls dem Flüssigsilikonkautschuk zugemischt wird. Das Wasser wird damit beispielsweise in-line dem Flüssigsilikonkautschuk gemeinsam mit dem Additiv zugeführt. Ein Additiv kann dabei auch unabhängig von der Zuführung des Wassers dem Flüssigsilikonkautschuk zugemischt werden, wobei das Additiv auch bereits in die gebildete Emulsion eingemengt werden kann.

Schließlich ergibt sich ein weiterer Vorteil dadurch, dass die Kavität des Werkzeuges vor dem Einspritzen der Emulsion evakuiert wird. Dadurch erfolgt die Volumenexpansion und damit die Verdampfung des Wasseranteils in der Emulsion in noch kürzerer Zeit, sodass sich eine verbesserte Homogenität des Silikonkautschukkörpers erreichen lässt.

### BEVORZUGTES AUSFÜHRUNGSBEISPIEL DER ERFINDUNG

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Figur 1: eine diagrammatische Darstellung einer ersten Variante zur Ausführung des erfindungsgemäßen Verfahrens,
- Figur 2: eine diagrammatische Darstellung einer zweiten Variante zur Ausführung des erfindungsgemäßen Verfahrens,
- Figur 3: ein Beispiel einer Extrudereinheit mit einem Werkzeug.

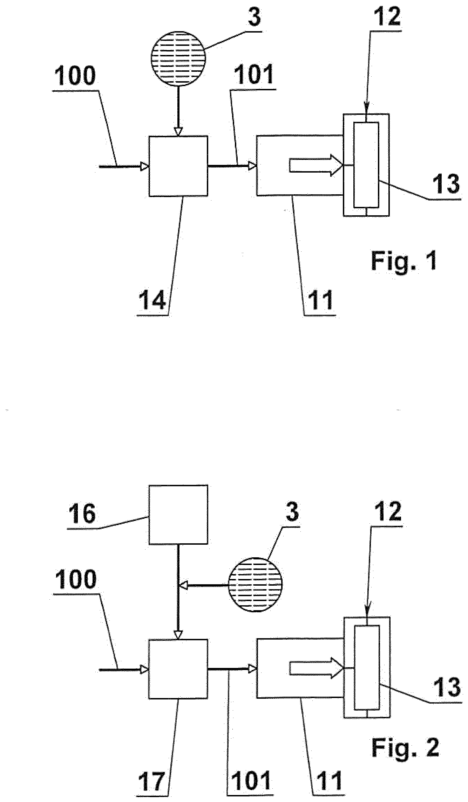

Figur 1 zeigt eine erste Variante eines Verfahrensaufbaus zur Ausführung des erfindungsgemäßen Verfahrens zum physikalischen Schäumen von Silikonkautschuk. Erfindungsgemäß wird dem Flüssigsilikonkautschuk 100 Wasser 3 zugegeben, wofür der Flüssigsilikonkautschuk 100 in eine Wassermischeinrichtung 14 überführt wird. Durch die Vermischung des Flüssigsilikonkautschuks 100 mit Wasser 3 wird eine Emulsion 101 gebildet, in der das Wasser in kleiner Tröpfchenform in der Masse des Flüssigsilikonkautschuks in Schwebe gehalten wird.

Die Emulsion 101 wird anschließend einer Extrudereinheit 11 zugeführt, und in der Extrudereinheit 11 wird die Emulsion 101 erwärmt, wobei die Erwärmung auf eine Temperatur erfolgt, die unterhalb der Verdampfungstemperatur des Wassers 3 der Emulsion 101 liegt.

Somit liegt die Emulsion 101 in der Extrudereinheit 11 in einer Form vor, in der der Anteil des Flüssigsilikonkautschuks 100 in der Emulsion 101 in einer noch unvernetzten Form vorliegt, und das Wasser 3 liegt in einer flüssigen Form vor.

In diesem Zustand wird die erwärmte Emulsion 101 nunmehr in die Kavität 13 des Werkzeugs 12 eingespritzt, wobei mit dem Einspritzen der Emulsion 101 eine Vulkanisation des Flüssigsilikonkautschuks 100 durch ein Erhitzen des Wassers 3 über eine Verdampfungstemperatur des Wassers 3 unter Aufschäumen eines formstabilen Silikonkautschukkörpers erfolgt. Die Herstellung des Silikonkautschukkörpers erfolgt folglich diskontinuierlich in einzelnen Spritzgussschritten. Anschließend kann der gebildete Silikonkautschukkörper durch Öffnen von dem Werkzeug 12 aus der Kavität 13 entnommen werden.

Figur 2 zeigt eine weitere Variante zur Ausführung des Verfahrens. Der Flüssigsilikonkautschuk 100 wird einer Additivzumischeinrichtung 17 zugeführt. Der Additivzumischeinrichtung 17 wird ein Additiv 16 zugeführt, um den Flüssigsilikonkautschuk 100 zu additivieren. Gemäß der in diesem Ausführungsbeispiel gezeigten Variante wird in-line auch das Wasser 3 mit dem Additiv 16 dem Flüssigsilikonkautschuk 100 zugeführt, sodass der additivierte Flüssigsilikonkautschuk 100 nunmehr als eine Emulsion 101 die Additivzumischeinrichtung 17 verlässt, wodurch sich eine erhebliche anlagentechnische Vereinfachung ergibt. Anschließend gelangt die Emulsion 101 in die Extrusionseinheit 11, und der Silikonkautschukkörper wird in der Kavität 13 des Werkzeuges 12 unter Vulkanisieren des Flüssigsilikonkautschuks 100 und unter Erhitzen des Wassers 3 über eine Verdampfungstemperatur des Wassers 3 eingespritzt, sodass eine Aufschäumung eines formstabilen Silikonkautschukkörpers unter einer Abformung der Kavität 13 erfolgt.

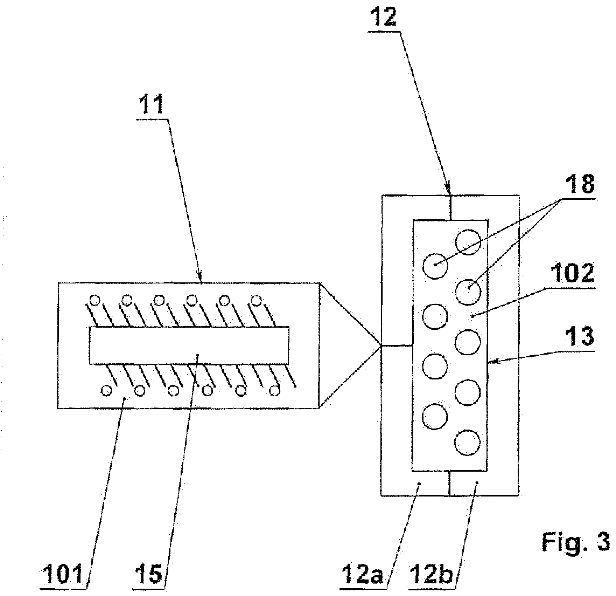

Figur 3 zeigt ein detailliertes Beispiel einer Extrudereinheit 11 mit einer Extruderschnecke 15, wobei die Extrudereinheit 11 mit Emulsion 101 gefüllt ist. Die Emulsion 101 wird in der Extrudereinheit 11 erhitzt und entsprechend durchmischt, wobei eine Druckzunahme in der Emulsion 101 erreicht wird. Die unter Druck gesetzte Emulsion 101, die in der Extrudereinheit 11 auf beispielsweise etwa 80 °C erhitzt wird, wird in die Kavität 13 des Werkzeuges 12 eingespritzt, wobei das Werkzeug 12 so beheizt ist, dass die eingespritzte Emulsion 101 auf eine Temperatur erhitzt wird, die über der Verdampfungstemperatur des Wassers in der Emulsion 101 liegt. Dadurch bilden sich im Silikonkautschukkörper 102 Gasblasen 18, die gebildet werden durch das verdampfte Wasser in der Kavität 13. Mit dem Verdampfen des Wassers geht eine starke Volumenzunahme einher, durch die das Aufschäumen des Silikonkautschukkörpers 102 erreicht wird. Anschließend kann durch ein Öffnen der beiden Werkzeugteile 12a und 12b der gebildete Silikonkautschukkörper 102 entnommen werden.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 3: Wasser
- 11: Extrudereinheit
- 12: Werkzeug
- 12a: erster Werkzeugteil
- 12b: zweiter Werkzeugteil
- 13: Kavität
- 14: Wassermischeinrichtung
- 15: Extruderschnecke
- 16: Additiv
- 17: Additivzumischeinrichtung
- 18: Gasblase
- 100: Flüssigsilikonkautschuk
- 101: Emulsion
- 102: formstabiler Silikonkautschukkörper

## Patentansprüche

1. Verfahren zum physikalischen Schäumen von Silikonkautschukkörpern mittels Flüssigsilikonkautschuk (100), wobei das Verfahren wenigstens die folgenden Schritte aufweist:
- Zugabe von Wasser (3) in den Flüssigsilikonkautschuk (100) unter Bildung einer Emulsion (101),
- Zuführen der Emulsion (101) an eine Extrudereinheit (11),
- Erwärmen der Emulsion (101) vor oder in der Extrudereinheit (11) bis unter eine Verdampfungstemperatur des Wassers (3) und
- Einspritzen der Emulsion (101) in ein Werkzeug (12) unter
a) Vulkanisation des Flüssigsilikonkautschuks (100), unter
b) Erhitzung des Wassers (3) bis über eine Verdampfungstemperatur des Wassers (3) und unter
c) Aufschäumung eines formstabilen Silikonkautschukkörpers (102), wobei das Werkzeug (12) eine beheizte Kavität (13) aufweist, wobei die wenigstens überwiegende Vulkanisation des Flüssigsilikonkautschuks (100) und die Erhitzung des Wassers (3) bis über eine Verdampfungstemperatur des Wassers (3) mittels eines Wärmeeintrags in die Emulsion (101) durch das Werkzeug (12) erfolgt, wobei die Emulsion (101) in der Kavität (13) des Werkzeugs (12) auf 100°C bis 250°C erhitzt wird.

2. Verfahren nach Anspruch 1,
**dadurch gekennzeichnet,**
**dass** die Emulsion (101) in der Extrudereinheit (11) auf 30°C bis 80°C erhitzt wird.

3. Verfahren nach einem der Ansprüche 1 oder 2,
**dadurch gekennzeichnet,**
**dass** die Beheizung der Kavität (13) nach einem Vulkanisieren des Flüssigsilikonkautschuks (100) und nach einer Verdampfung des Wassers (3) innerhalb der Kavität (13) beendet wird.

4. Verfahren nach einem der vorgenannten Ansprüche,
**dadurch gekennzeichnet,**
**dass** dem Flüssigsilikonkautschuk (100) wenigstens ein Additiv (16) über eine Additivzumischeinrichtung (17) zugemischt wird, wobei das Wasser (3) mit dem Additiv (16) ebenfalls dem Flüssigkeitskautschuk (100) zugemischt wird.

5. Verfahren nach einem der vorgenannten Ansprüche,
**dadurch gekennzeichnet,**
**dass** die Kavität (13) des Werkzeugs (12) vor dem Einspritzen der Emulsion (101) evakuiert wird.

## Claims

1. A method for physical foaming of silicone rubber members by means of liquid silicone rubber (100), wherein the method comprises at least the following steps:
- addition of water (3) to the liquid silicone rubber (100) by forming an emulsion (101),
- supplying the emulsion (101) to an extruder unit (11),
- heating of the emulsion (101) prior to or in the extruder unit (11) up to below an evaporation temperature of the water (3), and
- injecting the emulsion (101) into a tool (12) by
a) vulcanisation of the liquid silicone rubber (100), by
b) heating of the water (3) up to above an evaporation temperature of the water (3), and by
c) foaming a silicone rubber member (102) of stable form, wherein the tool (12) comprises a heated cavity (13), wherein the at least predominant vulcanisation of the liquid silicone rubber (100) and the heating of water (3) up to above an evaporation temperature of the water (3) takes place by means of a heat input into the emulsion (101) by the tool (12), wherein the emulsion (101) in the cavity (13) of the tool (12) is heated to 100 °C up to 250 °C.

2. The method according to claim 1,
**characterised in**
**that** the emulsion (101) in the extruder unit (11) is heated to 30 °C up to 80 °C.

3. The method according to any one of claims 1 or 2,
**characterised in**
**that** heating of the cavity (13) after vulcanisation of the liquid silicone rubber (100) and after an evaporation of the water (3) within the cavity (13) is terminated.

4. The method according to any one of the preceding claims,
**characterised in**
**that** at least one additive (16) is added to the liquid silicone rubber (100) via an additive mixing device (17), wherein the water (3) with the additive (16) is likewise added to the liquid silicone rubber (100).

5. The method according to any one of the preceding claims,
**characterised in**
**that** the cavity (13) of the tool (12) is evacuated prior to injecting the emulsion (101).

## Revendications

1. Procédé de moussage physique de corps en caoutchouc de silicone au moyen de caoutchouc liquide au silicone (100), le procédé comprenant au moins les étapes suivantes:
- addition d'eau (3) dans le caoutchouc liquide au silicone (100) sous formation d'une émulsion (101),
- alimentation de l'émulsion (101) à une unité d'extrudeuse (11),
- chauffer l'émulsion (101) avant ou dans l'unité d'extrudeuse (11) jusqu'au-dessous d'une température d'évaporation de l'eau (3), et
- injecter l'émulsion (101) dans un outil (12) sous
a) vulcanisation du caoutchouc liquide au silicone (100), sous
b) chauffage de l'eau (3) jusqu'au-dessus d'une température d'évaporation de l'eau (3), et sous
c) moussage d'un corps en caoutchouc de silicone (102) de forme stable, l'outil (12) comprenant une cavité chauffée (13), la vulcanisation au moins de façon prédominante du caoutchouc liquide au silicone (100) et le chauffage de l'eau (3) jusqu'au-dessus d'une température d'évaporation de l'eau (3) ayant lieu au moyen d'un apport de chaleur dans l'émulsion (101) par l'outil (12), l'émulsion (101) dans la cavité (13) de l'outil (12) étant chauffée à 100 °C jusqu'à 250 °C.

2. Procédé selon la revendication 1,
**caractérisé en ce**
**que** l'émulsion (101) dans l'unité d'extrudeuse (11) est chauffée à 30 °C jusqu'à 80 °C.

3. Procédé selon l'une quelconque des revendications 1 ou 2,
**caractérisé en ce**
**que** le chauffage de la cavité (13) après une vulcanisation du caoutchouc liquide au silicone (100) et après une évaporation de l'eau (3) dans la cavité (13) est terminé.

4. Procédé selon l'une quelconque des revendications précédentes,
**caractérisé en ce**
**qu'**au moins un additif (16) est ajouté au caoutchouc liquide au silicone (100) par un dispositif mélangeur d'additif (17), l'eau (3) avec l'additif (16) étant également ajouté au caoutchouc liquide au silicone (100).

5. Procédé selon l'une quelconque des revendications précédentes,
**caractérisé en ce**
**que** la cavité (13) de l'outil (12) est évacuée avant l'injection de l'émulsion (101).
